# EUROPÄISCHE PATENTANMELDUNG

(11) **EP 1 469 421 A1**
(43) Veröffentlichungstag der Anmeldung: **20.10.2004**
(21) Anmeldenummer: 04008975.7
(22) Anmeldetag: 15.04.2004
(51) Int. Cl.: G06K 19/077, G06K 7/00

(54) **Tragbarer Datenträger und Verfahren zur Kommunikation mit einem tragbaren Datenträger**

(30) Priorität: 17.04.2003 DE 10318052
(71) Anmelder: Giesecke & Devrient GmbH, 81677 München (DE)
(72) Erfinder: Finkenzeller, Klaus, 80939 München (DE)

(57) **Zusammenfassung**

Die Erfindung betrifft eine Chipkarte (1) mit einer elektronischen Schaltung (2) und einer Übertragungseinrichtung zur kontaktlosen Signalübertragung, die mit der elektronischen Schaltung (2) verbunden ist. Die Besonderheit der erfindungsgemäßen Chipkarte (1) besteht darin, dass eine Energiequelle (5) vorgesehen ist, mit deren Hilfe die elektronische Schaltung (2) ein elektrisches Signal erzeugt, das an einem Signalausgang (6) der elektronischen Schaltung (2) für die Übertragungseinrichtung bereitgestellt wird.

## Beschreibung

Die Erfindung betrifft einen tragbaren Datenträger und ein Verfahren zur Kommunikation mit einem tragbaren Datenträger gemäß dem Oberbegriff des Anspruchs 1 bzw. 10.

Tragbare Datenträger können bei einer Vielzahl unterschiedlicher Anwendungen eingesetzt werden, beispielsweise als Ausweisdokumente bei Zugangskontrollen, zur Abwicklung von Transaktionen des Zahlungsverkehrs, als intelligente Etiketten (Smart Labels) oder Echtheitsmerkmale in Wertpapieren usw. Die Anwendungen werden jeweils entweder in Zusammenwirkung mit einem Endgerät oder mit einer anderen tragbaren Datenträgern durchgeführt. Dabei hat es sich bei einer Reihe von Anwendungen als vorteilhaft erwiesen, wenn die im Rahmen der Anwendung durchgeführte Datenübertragung kontaktlos abgewickelt wird. Eine kontaktlose Datenübertragung kann beispielsweise durch eine induktive Kopplung zwischen einen tragbaren Datenträger, im folgenden als Chipkarte bezeichnet, und einem Endgerät durchgeführt werden. Dabei wird vom Endgerät ein sich zeitlich änderndes magnetisches Feld erzeugt, um die Chipkarte mit Energie zu versorgen und Daten an die Chipkarte zu übertragen. Die Chipkarte wird über eine Antennenspule an das magnetische Feld angekoppelt und kann durch Lastmodulation, d. h. durch eine sich zeitlich ändernde Belastung des magnetischen Feldes, Daten an das Endgerät übertragen. Der Betrieb der Chipkarte ist dabei nur innerhalb des magnetischen Felds und folglich nur in der Nähe eines entsprechenden Endgeräts möglich. Ein vom Endgerät unabhängiger Betrieb der Chipkarte ist nicht möglich. Dies bedeutet einerseits, dass das Endgerät permanent ein magnetisches Feld erzeugen muss, damit es ermitteln kann, ob eine Chipkarte innerhalb seiner Reichweite vorhanden ist. Andererseits ist es nicht möglich, eine kontaktlose Datenübertragung zwischen zwei Chipkarten ohne Unterstützung des Endgeräts durchzuführen.

Insbesondere zur Übertragung kleiner Geldbeträge besteht aber vielfach der Wunsch nach einer Möglichkeit zur direkten Datenübertragung zwischen Chipkarten, für die kein Endgerät benötigt wird.

Der Erfindung liegt daher die Aufgabe zugrunde, die kontaktlose Datenübertragung bei tragbaren Datenträgern, insbesondere bei Chipkarten weiter zu verbessern.

Diese Aufgabe wird durch einen Datenträger mit der Merkmalskombination des Anspruchs 1 gelöst.

Der erfindungsgemäße tragbare Datenträger (Chipkarte) weist eine elektronische Schaltung und eine Übertragungseinrichtung zur kontaktlosen Signalübertragung, die mit der elektronischen Schaltung verbunden ist, auf. Die Erfindung zeichnet sich dadurch aus, dass eine Energiequelle vorgesehen ist, mit deren Hilfe die elektronische Schaltung ein elektrisches Signal erzeugt, das an einem Signalausgang der elektronischen Schaltung für die Übertragungseinrichtung bereitgestellt wird.

Die Erfindung hat den Vorteil, dass die Chipkarte unabhängig von einem Endgerät betrieben werden kann, so dass beispielsweise eine direkte Kommunikation zwischen zwei Chipkarten ohne Unterstützung eines Endgeräts möglich ist. Dabei ist es im Sinne eines autonomen Betriebs der Chipkarte vorteilhaft, wenn die Chipkarte über einen Taktgenerator zur Erzeugung eines periodischen Taktsignals verfügt.

Die Übertragungseinrichtung kann direkt oder über einen Ohmschen Widerstand mit dem Signalausgang der elektronischen Schaltung verbunden sein. Insbesondere für den Fall, dass die Übertragungseinrichtung von weiteren Einheiten der Chipkarte genutzt wird, ist es von Vorteil, wenn der Signalausgang der elektronischen Schaltung in einen hochohmigen Zustand schaltbar ist. Dadurch können Störeinflüsse vermieden werden. So kann die elektronische Schaltung beispielsweise eine Schnittstelleneinheit zur Einund Ausgabe von Daten aufweisen, die mit der Übertragungseinrichtung verbunden ist. Um unerwünschte Wechselwirkungen mit der Schnittstelleneinheit bei anderweitiger Nutzung der Chipkarte zu vermeiden, ist es von Vorteil, wenn die Verbindung zwischen der Schnittstelleneinheit und der Übertragungseinrichtung je nach Bedarf aufgehoben werden kann.

In einem vorteilhaften Ausführungsbeispiel ist die Übertragungseinrichtung über eine Diode mit einem Signaleingang des integrierten Schaltkreises verbunden und auf diese Weise eine sehr einfache und zuverlässige Demodulationsschaltung realisiert.

Je nach Einsatzgebiet der Chipkarte kann die Übertragungseinrichtung beispielsweise eine Antennenspule oder wenigstens eine kapazitive Koppelfläche aufweisen.

Die Erfindung bezieht sich weiterhin auf ein Verfahren zum Betreiben einer Chipkarte mit einer elektronischen Schaltung und einer Übertragungseinrichtung zur kontaktlosen Signalübertragung, die mit der elektronischen Schaltung verbunden ist. Das erfindungsgemäße Verfahren zeichnet sich dadurch aus, dass von der elektronischen Schaltung ein elektrisches Signal erzeugt und an die Übertragungseinrichtung angelegt wird und daraufhin von der Übertragungseinrichtung ein entsprechendes Sendesignal kontaktlos übertragen wird.

Das elektrische Signal wird bevorzugt als ein periodisches Trägersignal ausgebildet. Dabei kann das Trägersignal zur Übertragung von Daten moduliert werden. Dies hat den Vorteil, dass mit demselben Signal eine kontaktlose Übertragung von Energie und Daten möglich ist.

Bei einem bevorzugten Ausführungsbeispiel wird zur Erzeugung des elektrischen Signals der Pegel eines Signalausgangs der elektronischen Schaltung, an dem die Übertragungseinrichtung angeschlossen ist, zwischen unterschiedlichen Niveaus umgeschaltet. Die Umschaltung kann dabei softwaregesteuert oder mittels eines Taktsignals, das von einem Taktgenerator der Chipkarte erzeugt wird, erfolgen, so dass die Erzeugung des elektrischen Signals mit relativ einfachen Mitteln durchführbar ist.

Das Sendesignal kann an eine weitere Chipkarte gesendet werden. Dabei ist es vorteilhaft, die beiden Chipkarten mit ihren Hauptflächen aneinander zu legen, um eine möglichst gute Kopplung zu erreichen. In einem bevorzugten Ausführungsbeispiel wird das Sendesignal von der weiteren Chipkarte empfangen und mittels einer Diode demoduliert. Zwischen den beiden Chipkarten kann eine Master-Slave-Hierarchie dynamisch festgelegt werden. Dies hat den Vorteil, dass ein sehr flexibler Einsatz der Chipkarten möglich ist, da jeweils erst bei der Durchführung der Datenübertragung entschieden werden muss, welche der beteiligten Chipkarten als Master und welche als Slave eingesetzt wird.

Das Sendesignal kann weiterhin an ein Endgerät gesendet werden. Insbesondere kann das Sendesignal zur Aktivierung des Endgeräts gesendet werden. Dies hat den Vorteil, dass das Endgerät nicht fortwährend ein beispielsweise magnetisches Feld erzeugen muss, um festzustellen, ob sich eine Chipkarte in Übertragungsreichweite befindet. Stattdessen kann das Endgerät in einem stromsparenden Modus betrieben werden und im Bedarfsfall von der Chipkarte aktiviert werden.

Die Erfindung wird im folgenden anhand der in der Zeichnung dargestellten Ausführungsbeispiele erläutert.

Es zeigen
- Fig.1: eine schematische Darstellung eines Ausführungsbeispiels der erfindungsgemäßen Chipkarte,
- Fig. 2: den zeitlichen Verlauf des am Signalausgang des integrierten Schaltkreises der Chipkarte gemäß Fig. 1 anliegenden elektrischen Signals,
- Fig. 3: eine schematische Darstellung eines weiteren Ausführungsbeispiels der erfindungsgemäßen Chipkarte,
- Fig. 4: eine schematische Darstellung zweier Chipkarten, zwischen denen eine Datenübertragung durchgeführt wird,
- Fig. 5: ein Diagramm für den zeitlichen Verlauf der an der Antennenspule der ersten Chipkarte aus Fig. 4 anliegenden Spannung,
- Fig. 6: eine schematische Darstellung eines nochmals abgewandelten Ausführungsbeispiels der erfindungsgemäßen Chipkarte,
- Fig. 7: ein Diagramm für die zeitlichen Verläufe von Spannungen, die bei der in Fig. 6 dargestellten Chipkarte im Sendebetrieb und im Empfangsbetrieb auftreten und
- Fig. 8: eine schematische Darstellung eines Ausführungsbeispiels der erfindungsgemäßen Chipkarte, das für eine kapazitive Kopplung ausgelegt ist.

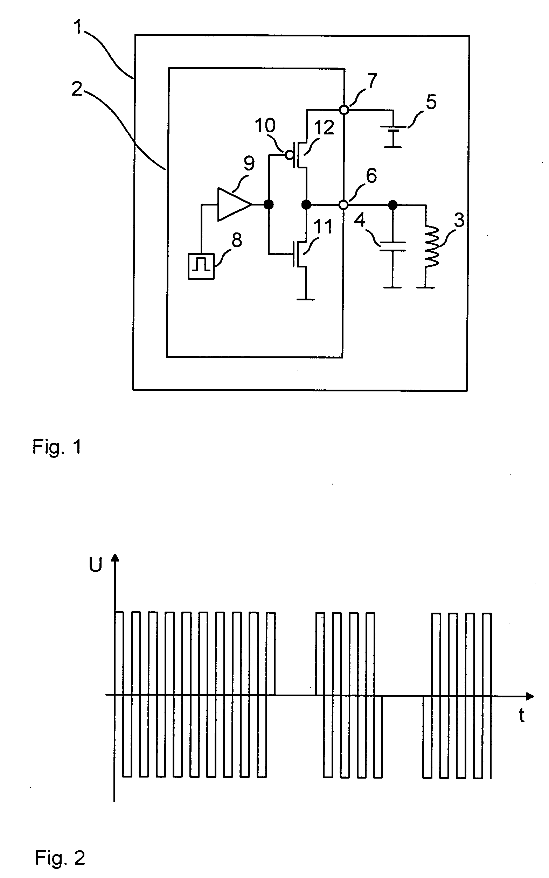

Fig. 1 zeigt eine schematische Darstellung eines Ausführungsbeispiels der erfindungsgemäßen Chipkarte 1. Die Chipkarte 1 weist einen integrierten Schaltkreis 2, eine Antennenspule 3, einen zur Antennenspule 3 parallel geschalteten Kondensator 4 und eine Energiequelle, beispielsweise eine Batterie oder Solarzelle 5 auf. Die Antennenspule 3 und der Kondensator 4 sind mit einem Signalausgang 6 des integrierten Schaltkreises 2 verbunden. Die Energiequelle 5 ist an einen Betriebsspannungseingang 7 des integrierten Schaltkreises 2 angeschlossen. Weiterhin sind symbolisch einige Elemente der internen Beschaltung des integrierten Schaltkreises 2 dargestellt, mit deren Hilfe ein elektrisches Signal am Signalausgang 6 erzeugt wird. So weist der integrierte Schaltkreis 2 einen Taktgenerator 8 auf, der ein periodisches Signal erzeugt und dessen Ausgang mit dem Eingang eines Verstärkers 9 verbunden ist. Der Ausgang des Verstärkers 9 ist mit dem Eingang eines Negierers 10 und der Steuerelektrode eines ersten Transistors 11 verbunden. Der Ausgang des Negierers 10 ist mit der Steuerelektrode eines zweiten Transistors 12 verbunden. Der zweite Transistor 12 ist zwischen den Betriebsspannungseingang 7 und den Signalsausgang 6 geschaltet und legt im durchgeschalteten Zustand die am Betriebsspannungseingang 7 anliegende Spannung der Energiequelle 5 an den Signalausgang 6 an. Der erste Transistor 11 ist zwischen den Signalausgang 6 und Masse geschaltet und legt den Signalausgang 6 im durchgeschalteten Zustand auf Masse. Die gemeinsame Ansteuerung der Transistoren 11 und 12 einmal direkt und einmal über den Negierer 10 bewirkt, dass die Schaltzustände der Transistoren 11 und 12 jeweils komplementär zueinander sind und der Signalausgang 6 entweder auf Masse oder auf die Spannung der Energiequelle 5 gelegt wird. Entsprechend dem Signalverlauf des vom Taktgenerator 8 ausgegebenen Signals liegt der Signalausgang 6 in schneller Abfolge abwechselnd auf Batteriespannung und auf Masse. In einer Abwandlung der Erfindung wird die Ansteuerung mittels des Taktgenerators 8 durch eine Software-Steuerung ersetzt und auf diese Weise ein entsprechendes elektrisches Signal am Signalausgang 6 erzeugt.

Die mit dem Signalausgang 6 verbundene Antennenspule 3 und der Kondensator 4 bilden einen Schwingkreis, der durch das elektrische Signal zu Schwingungen angeregt wird, so dass von der Antennenspule 3 ein im Takt des elektrischen Signals wechselndes Magnetfeld erzeugt wird. Ein optimaler Wirkungsgrad für die Ausbildung des Magnetfeldes ergibt sich dann, wenn die Frequenz des elektrischen Signals der Resonanzfrequenz des Schwingkreises entspricht. Zur Übertragung von Daten wird das am Signalausgang 6 anliegende elektrische Signal zeitweise unterbrochen oder z.B. für eine ASK-Modulation (Amplitude Shift Keying) gedämpft und damit entsprechend den zu übertragenden Daten moduliert. Einzelheiten hierzu werden anhand von Fig. 2 erläutert.

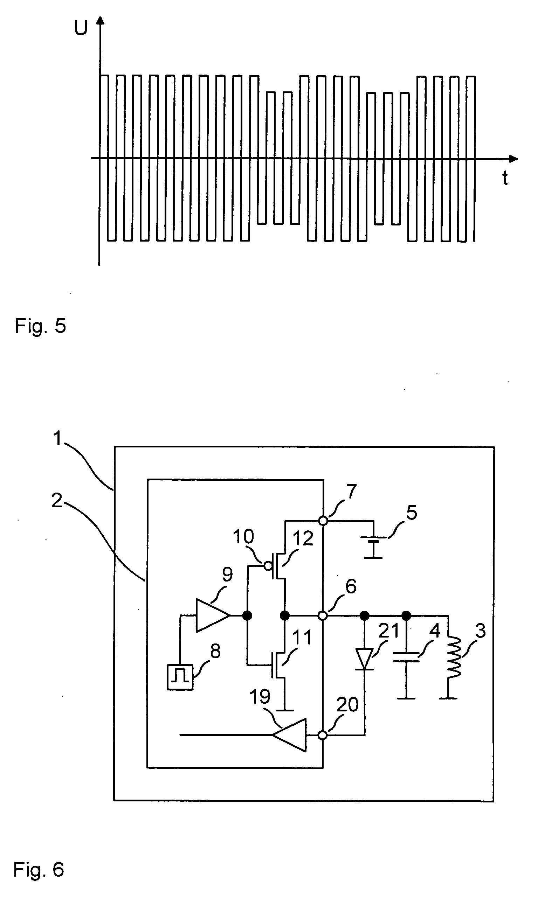

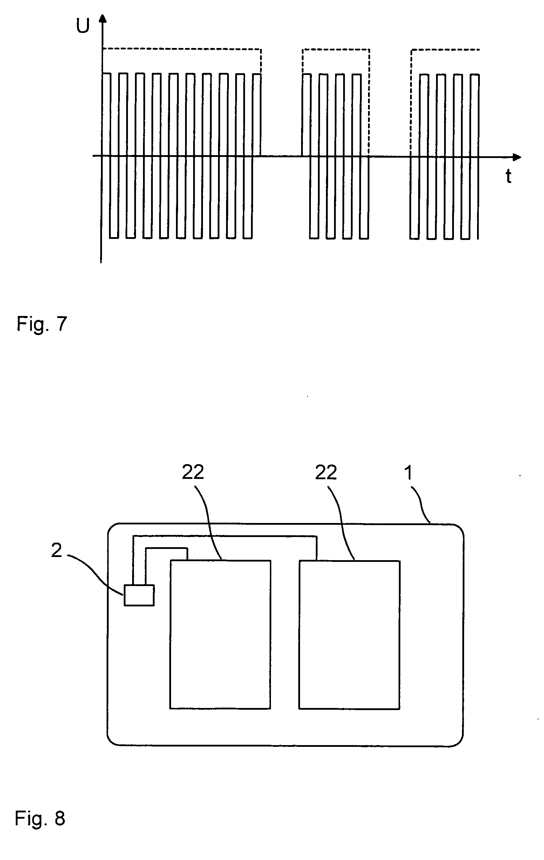

Fig. 2 zeigt den zeitlichen Verlauf des am Signalausgang 6 des integrierten Schaltkreises 2 anliegenden elektrischen Signals im Falle einer Unterbrechung des elektrischen Signals. Auf der Ordinate ist die am Signalausgang 6 anliegende Spannung U und auf der Abszisse ist die Zeit t aufgetragen. Bei der Darstellung der Fig. 2 handelt es sich nicht um einen tatsächlich gemessenen Signalverlauf, sondern um eine vereinfachte Prinzipdarstellung. Entsprechendes gilt auch für die Fig. 5 und 7. Der grundsätzliche Signalverlauf wird durch ein sich mit hoher Frequenz periodisch wiederholendes Trägersignal bestimmt. Dem Trägersignal ist eine vergleichsweise niederfrequente Modulation überlagert, durch die das Trägersignal für gewisse Zeitintervalle jeweils vollständig verschwindet, d. h. der Modulationsgrad beträgt 100 %. Das Modulationsmuster wird durch die zu übertragenden Daten vorgegeben und ist in entsprechender Weise auch bei dem durch die Antennenspule 3 erzeugten Magnetfeld vorhanden. Somit ist mit dem in Fig. 1 dargestellten Ausführungsbeispiel der Chipkarte 1 eine unidirektionale kontaktlose Datenübertragung möglich, die ohne jegliche Einwirkung eines Endgeräts durchgeführt werden kann. Diese Datenübertragung kann beispielsweise dazu genutzt werden, eine Identifikationsnummer auszusenden, die z. B. für eine Zutrittskontrolle zu Gebäuden, Geldautomaten usw. herangezogen werden kann. Ebenso ist es auch möglich, eine gesicherte Identifikation durch Aussenden eines kryptographischen Wechselcodes durchzuführen, z. B. an eine weitere kontaktlose Chipkarte oder zum Öffnen der Türen eines Kraftfahrzeugs.

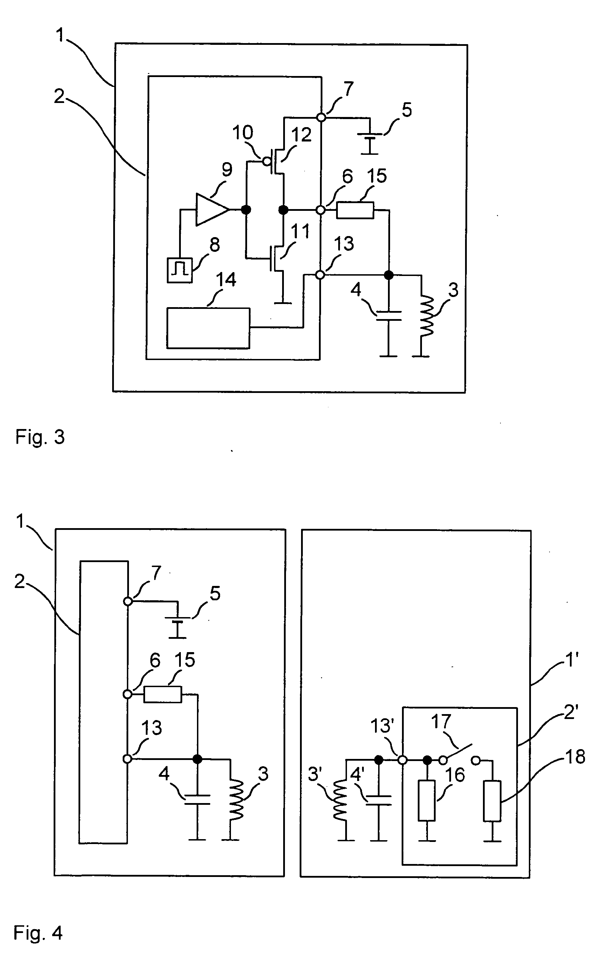

Fig. 3 zeigt eine schematische Darstellung eines weiteren Ausführungsbeispiels der erfindungsgemäßen Chipkarte 1. Der integrierte Schaltkreis 2 weist wiederum die bereits in Fig.1 dargestellten Komponenten zur Erzeugung des am Signalausgang 6 bereitgestellten elektrischen Signals auf. Allerdings sind die Antennenspule 3 und der Kondensator 4 bei diesem Ausführungsbeispiel gemäß der bei kontaktlosen Chipkarten üblichen Weise an einen Antennenanschluss 13 des integrierten Schaltkreises 2 angeschlossen, der intern mit einer Schnittstelleneinheit 14 verbunden ist. Zusätzlich ist der Signalausgang 6 über einen Ohmschen Widerstand 15 mit der Antennenspule 3 und dem Kondensator 4 verbunden. Statt des Widerstands 15 kann auch eine direkte Leitungsverbindung gewählt werden. Der Antennenanschluss 13 kann beispielsweise mittels eines entsprechenden Konfigurationsregisters des integrierten Schaltkreises 2 abgeschaltet werden. Wenn der Antennenanschluss 13 abgeschaltet ist, kann die Chipkarte 1 in der bei den Fig. 1 und 2 beschriebenen Weise als unidirektionaler Sender eingesetzt werden, d. h. aktiv Daten senden. Weiterhin kann der Signalausgang 6 in einen hochohmigen Zustand geschaltet werden und zwischen der Chipkarte 1 und einem Endgerät eine kontaktlose bidirektionale Datenübertragung durchgeführt werden, bei der die Chipkarte 1 in bekannter Weise vom Endgerät mit Energie versorgt wird und zum Senden von Daten eine Lastmodulation eines vom Endgerät erzeugten magnetischen Feldes vornimmt. Die letztgenannte Betriebsart wird im folgenden als passive Datenübertragung bezeichnet, da die Chipkarte 1 nicht selbst ein Feld erzeugt, sondern lediglich ein anderweitig erzeugtes Feld beeinflusst.

Das in Fig. 3 dargestellte Ausführungsbeispiel der Chipkarte 1 kann beispielsweise dazu verwendet werden, ein kontaktlos arbeitendes Endgerät, das sich in einem Stromsparmodus befindet und kein magnetisches Feld erzeugt, zu aktivieren. Hierzu wird von der Chipkarte 1, beispielsweise ausgelöst durch einen Tastendruck eines Benutzers, eine Aktivierungssequenz aktiv an das Endgerät gesendet. Das Endgerät detektiert die Aktivierungssequenz und verlässt den Stromsparmodus, um mit der Chipkarte 1 mittels eines vom Endgerät erzeugten magnetischen Felds zu kommunizieren. Diese Kommunikation wird seitens der Chipkarte 1 durch eine passive Datenübertragung durchgeführt, so dass bei dieser Anwendung das aktive Senden lediglich zum Einleiten der Kommunikation mit dem Endgerät benötigt wird.

Die Chipkarte 1 gemäß Fig. 3 kann zudem auch eingesetzt werden, um ohne die Einwirkung eines Endgeräts Daten mit einer weiteren Chipkarte 1 auszutauschen. Dies ist in Fig. 4 dargestellt.

Fig. 4 zeigt eine schematische Darstellung einer links abgebildeten ersten Chipkarte 1 und einer rechts abgebildeten zweiten Chipkarte 1', zwischen denen eine kontaktlose Datenübertragung durchgeführt wird. Bei der ersten Chipkarte 1 handelt es sich um das Ausführungsbeispiel gemäß Fig. 3, das über eine aktive Sendefunktion verfügt. Für die im folgenden beschriebene Vorgehensweise bei der Datenübertragung ist es ausreichend, wenn die zweite Chipkarte 1' in der Lage ist, eine passive Datenübertragung durchzuführen. Die zweite Chipkarte 1' kann somit wahlweise gemäß dem in Fig. 3 dargestellten Ausführungsbeispiel oder einem beliebigen anderen Ausführungsbeispiel ausgebildet sein, mit dem eine passive Datenübertragung durchgeführt werden kann. Dementsprechend sind in Fig. 4 nur diejenigen Komponenten der zweiten Chipkarte 1' dargestellt, die im Rahmen der passiven Datenübertragung benötigt werden. Weitere Komponenten können vorhanden sein, sind aber nicht dargestellt. Analog zum integrierten Schaltkreis 2 mit dem Antennenanschluss 13 sowie zur Antennenspule 3 und dem Kondensator 4 der ersten Chipkarte 1 weist die zweite Chipkarte 1' einen integrierten Schaltkreis 2' mit einem Antennenanschluss 13' sowie eine Antennenspule 3' und einen dazu parallel geschalteten Kondensator 4' auf. Weiterhin sind bei der zweiten Chipkarte 1' zur Verdeutlichung der Funktionsweise der passiven Datenübertragung mittels Lastmodulation symbolisch ein Lastwiderstand 16, ein Schalter 17 und ein Modulationswiderstand 18 dargestellt. Der Lastwiderstand 16 ist parallel zur Antennenspule 3' eingezeichnet und repräsentiert die Belastung der Antennenspule 3' durch den integrierten Schaltkreis 2'. Der Modulationswiderstand 18 ist einerseits an Masse angeschlossen und andererseits über den Schalter 17 mit dem Antennenanschluss 13' verbunden, so dass die Antennenspule 3' bei geschlossenem Schalter 17 zusätzlich durch den Modulationswiderstand 18 und damit stärker belastet wird als bei offenem Schalter 17. Somit kann durch gezieltes Öffnen und Schließen des Schalters 17 die Belastung der Antennenspule 3' auf gewünschte Weise moduliert werden.

Zur Durchführung der kontaktlosen Datenübertragung werden die beiden Chipkarten 1 und 1' mit ihren Hauptflächen aneinander gelegt oder zumindest einander sehr nahe angenähert, um eine starke magnetische Kopplung zwischen den Antennenspulen 3 und 3' der beiden Chipkarten 1 und 1' zu ermöglichen. Durch fortwährendes aktives Senden der ersten Chipkarte 1 wird die zweite Chipkarte 1' mit Energie versorgt. Sollen dabei von der ersten Chipkarte 1 an die zweite Chipkarte 1' Daten übertragen werden, so wird das von der ersten Chipkarte 1 gesendete Trägersignal entsprechend der Darstellung in Fig. 2 zeitweise unterbrochen (oder auch abgesenkt (ASK)). Die zweite Chipkarte 1' empfängt das von der Antennenspule 3 der ersten Chipkarte 1 gesendete Signal mit der zweiten Antennenspule 3' und bezieht daraus die für den Betrieb des integrierten Schaltkreises 2' benötigte Energie. Weiterhin demoduliert die zweite Chipkarte 1' das empfangene Signal, um die von der ersten Chipkarte 1 gesendeten Daten zu ermitteln. Wenn lediglich Energie und keine Daten zur zweiten Chipkarte 1' transferiert werden sollen, kann das Trägersignal von der ersten Chipkarte 1 ohne Unterbrechung gesendet werden. Zur Übertragung von Daten in umgekehrter Richtung von der zweiten Chipkarte 1' zur ersten Chipkarte 1 wird von der zweiten Chipkarte 1' eine Lastmodulation durchgeführt. Diese bewirkt durch die magnetische Kopplung der beiden Antennenspulen 3 und 3' eine geringfügige Modulation des an der Antennenspule 3 der ersten Chipkarte 1 anliegenden Signals, die vom integrierten Schaltkreis 2 der ersten Chipkarte 1 zur Ermittlung der übertragenen Daten ausgewertet wird. Das derart modulierte Signal ist in Fig. 5 dargestellt.

Fig. 5 zeigt ein Diagramm für den zeitlichen Verlauf der an der Antennenspule der ersten Chipkarte 1 aus Fig. 4 anliegenden Spannung für einen Zeitabschnitt, während dem von der zweiten Chipkarte 1' der Fig. 4 eine Lastmodulation durchgeführt wird. Auf der Ordinate ist die Spannung U und auf der Abszisse die Zeit t aufgetragen. Dem hochfrequenten Trägersignal ist das aufmodulierte Datensignal überlagert, das eine deutlich niedrigere Frequenz aufweist und sich durch eine reduzierte Spannungsamplitude auszeichnet. Um die Modulation sichtbar zu machen, ist diese um ein Vielfaches stärker dargestellt, als dies tatsächlich der Fall ist. Aus dem Muster, mit dem die durch die Modulation reduzierten Spannungsamplituden auftreten, können die von der zweiten Chipkarte 1' an die erste Chipkarte 1 übertragenen Daten ermittelt werden.

Fig. 6 zeigt eine schematische Darstellung eines nochmals abgewandelten Ausführungsbeispiels der erfindungsgemäßen Chipkarte 1. Die Besonderheit dieses Ausführungsbeispiels besteht darin, dass es eine Detektorschaltung zur Demodulation der über die Antennenspule 3 empfangenen Signale aufweist. Im einzelnen verfügt das Ausführungsbeispiel gemäß Fig. 6 zusätzlich zu den in Fig. 1 dargestellten Komponenten innerhalb des integrierten Schaltkreises 2 über einen weiteren Verstärker 19, dessen Eingang mit einem Signaleingang 20 des integrierten Schaltkreises 2 verbunden ist. Zwischen den Signaleingang 20 und den Signalausgang 6 ist eine Diode 21 geschaltet, über die dem Signaleingang 20 die von der Antennenspule 3 empfangenen Signale nach Umwandlung in eine dazu proportionale Gleichspannung zugeführt werden.

Zur Durchführung einer bidirektionalen Datenübertragung werden zwei der in Fig. 6 dargestellten Chipkarten 1 mit ihren Hauptflächen aneinandergelegt. Dabei ist jede der beiden Chipkarten 1 in der Lage, auf die im folgenden beschriebene Weise Daten zu senden und zu empfangen.

Im Sendebetrieb erzeugt die Chipkarte 1 an ihrem Signalausgang 6 ein periodisches Trägersignal, das der Antennenspule 3 zugeführt wird und die Ausbildung eines entsprechenden magnetischen Wechselfeldes zur Folge hat. Zur Übertragung der gewünschten Daten wird das Trägersignal dabei entsprechend moduliert, d. h. jeweils zeitweise unterbrochen.

Im Empfangsbetrieb wird in der Antennenspule 3 der Chipkarte 1 durch das magnetische Wechselfeld eine Wechselspannung induziert. Mit Hilfe der Diode 21 wird die Wechselspannung in eine dazu proportionale Gleichspannung umgewandelt und dem Signaleingang 20 des integrierten Schaltkreises 2 zugeführt. Der integrierte Schaltkreis 2 wertet den Verlauf der Gleichspannung aus und ermittelt daraus die mittels des magnetischen Wechselfelds übertragenen Daten.

Typische Signalverläufe für den Sendebetrieb und für den Empfangsbetrieb der in Fig. 6 dargestellten Chipkarte 1 sind in Fig. 7 dargestellt.

Fig. 7 zeigt ein Diagramm für die zeitlichen Verläufe von Spannungen, die bei der in Fig. 6 dargestellten Chipkarte 1 im Sendebetrieb und im Empfangsbetrieb auftreten. Dabei ist jeweils die Spannung U auf der Ordinate und die Zeit t auf der Abszisse aufgetragen. Im Sendebetrieb folgt die am Signalausgang 6 des integrierten Schaltkreises 2 und damit an der Antennenspule 3 anliegende Spannung dem als eine durchgezogene Linie dargestellten Verlauf. Diese Spannung besteht aus einer hochfrequenten Wechselspannung zur Ausbildung des Trägersignals, die im Takt der zu sendenden Daten abgeschaltet wird, so dass eine Modulation mit einem Modulationsgrad von 100 % vorliegt. Als eine gestrichelte Linie ist der zugehörige zeitliche Verlauf der Spannung dargestellt, die im Empfangsbetrieb über die Diode 21 dem Signaleingang 20 des integrierten Schaltkreises 2 zugeführt wird. Es handelt sich dabei um eine Gleichspannung, die zeitweise auf Null zurückgeht und ansonsten einen konstanten Wert aufweist. Wie der Fig. 7 zu entnehmen ist, führen die im Sendebetrieb durchgeführten Unterbrechungen der Wechselspannung am Signalausgang 6 im Empfangsbetrieb jeweils zu einem Verschwinden der am Signaleingang 20 anliegenden Gleichspannung, so dass der Informationsgehalt der im Sendebetrieb erzeugten Wechselspannung durch die im Empfangsbetrieb gewonnene Gleichspannung unmittelbar abgebildet wird.

Zur Durchführung einer bidirektionalen Datenübertragung zwischen zwei Chipkarten 1 ist es zusätzlich zu den vorstehend beschriebenen technischen Spezifikationen erforderlich, eine Hierarchie zwischen den beiden Chipkarten 1 zu definieren und dadurch festzulegen, welche der beiden Chipkarten 1 bei der Datenübertragung die Federführung übernimmt. Im Rahmen der Erfindung kann die Hierarchie dynamisch definiert werden, so dass während der Datenübertragung bestimmt wird, welche der beiden Chipkarten 1 die Funktion des Masters und welche die Funktion des Slaves übernimmt. In der Regel wird dabei so vorgegangen, dass die Chipkarte 1, die die Datenübertragung einleitet, die Funktion des Masters übernimmt. Die andere Chipkarte 1 übernimmt die Funktion des Slaves. Dabei wird die Datenübertragung in der Regel durch einen Benutzer manuell eingeleitet, beispielsweise durch Eingabe eines zu transferierenden Betrags oder durch Bestätigung einer Transaktion usw. Die Chipkarte 1, die die Slave-Funktion übernimmt, kann beispielsweise durch Betätigen einer Taste in einen Bereitschaftsmodus versetzt werden und auf die Übertragung von Daten von der Chipkarte 1 mit der Master-Funktion warten. Ebenso kann die Chipkarte 1 mit der Slave-Funktion über eine Detektionsschaltung verfügen, die beim Anliegen einer durch das Senden der Chipkarte 1 mit der Master-Funktion hervorgerufenen Spannung ein Wake-Up-Signal erzeugt, um die Chipkarte 1 in einen Betriebsmodus zu versetzen.

Bei den bislang beschriebenen Ausführungsbeispielen der erfindungsgemäßen Chipkarte 1 erfolgt die Datenübertragung jeweils durch eine magnetische Kopplung. Im Rahmen der Erfindung sind aber auch andere Arten der Kopplung möglich, beispielsweise eine kapazitive Kopplung. Ein Ausführungsbeispiel der Chipkarte 1, bei der die Datenübertragung über eine kapazitive Kopplung durchgeführt wird, ist in Fig. 8 dargestellt.

Fig. 8 zeigt eine schematische Darstellung eines Ausführungsbeispiels der erfindungsgemäßen Chipkarte 1, das für eine kapazitive Kopplung ausgelegt ist. Hierzu weist die Chipkarte 1 zwei kapazitive Koppelflächen 22 auf, die die Funktion der Antennenspule 3 und des Kondensators 4 beispielsweise des in Fig. 6 dargestellten Ausführungsbeispiels der Chipkarte 1 übernehmen. In Fig. 8 ist lediglich die Verschaltung der kapazitiven Koppelflächen 22 mit dem integrierten Schaltkreis 2 dargestellt. Der sonstige Aufbau der Chipkarte 1 ist in Fig. 8 nicht dargestellt und entspricht bis auf die Antennenspule 3 und den Kondensator 4 dem Ausführungsbeispiel gemäß Fig. 6. Auch die Funktionsweise entspricht dem Ausführungsbeispiel gemäß Fig. 6, wobei jeweils zu berücksichtigen ist, dass die kapazitiven Koppelflächen 22 die Funktion der Antennenspule 3 und des Kondensators 4 übernehmen.

Je nach Einsatzgebiet der Chipkarte 1 kann die durch den integrierten Schaltkreis 2 realisierte elektronische Schaltung jeweils auch partiell oder vollständig aus diskreten Bauelementen bestehen.

## Patentansprüche

1. Tragbarer Datenträger mit einer elektronischen Schaltung (2) und einer Übertragungseinrichtung zur kontaktlosen Signalübertragung, die mit der elektronischen Schaltung (2) verbunden ist, **dadurch gekennzeichnet, dass** eine Energiequelle (5) vorgesehen ist, mit deren Hilfe die elektronische Schaltung (2) ein elektrisches Signal erzeugt, das an einem Signalausgang (6) der elektronischen Schaltung (2) für die Übertragungseinrichtung bereitgestellt wird.

2. Tragbarer Datenträger nach Anspruch 1, **dadurch gekennzeichnet, dass** ein Taktgenerator (8) zur Erzeugung eines periodischen Taktsignals vorgesehen ist.

3. Tragbarer Datenträger nach einem der vorhergehenden Ansprüche, **dadurch gekennzeichnet, dass** die Übertragungseinrichtung direkt oder über einen Ohmschen Widerstand (15) mit dem Signalausgang (6) der elektronischen Schaltung (2) verbunden ist.

4. Tragbarer Datenträger nach einem der vorhergehenden Ansprüche, **dadurch gekennzeichnet, dass** der Signalausgang (6) der elektronischen Schaltung (2) in einen hochohmigen Zustand schaltbar ist.

5. Tragbarer Datenträger nach einem der vorhergehenden Ansprüche, **dadurch gekennzeichnet, dass** die elektronische Schaltung (2) eine Schnittstelleneinheit (14) zur Ein- und Ausgabe von Daten aufweist und die Übertragungseinrichtung mit der Schnittstelleneinheit (14) verbunden ist.

6. Tragbarer Datenträger nach Anspruch 5, **dadurch gekennzeichnet, dass** die Verbindung zwischen der Schnittstelleneinheit (14) und der Übertragungseinrichtung aufhebbar ist.

7. Tragbarer Datenträger nach einem der Ansprüche 1 bis 4, **dadurch gekennzeichnet, dass** die Übertragungseinrichtung über eine Diode (21) mit einem Signaleingang (20) des integrierten Schaltkreises (2) verbunden ist.

8. Tragbarer Datenträger nach einem der vorhergehenden Ansprüche, **dadurch gekennzeichnet, dass** die Übertragungseinrichtung eine Antennenspule (3) aufweist.

9. Tragbarer Datenträger nach einem der vorhergehenden Ansprüche, **dadurch gekennzeichnet, dass** die Übertragungseinrichtung wenigstens eine kapazitive Koppelfläche (22) aufweist.

10. Verfahren zum Betreiben eines tragbaren Datenträgers (1) mit einer elektronischen Schaltung (2) und einer Übertragungseinrichtung zur kontaktlosen Signalübertragung, die mit der elektronischen Schaltung (2) verbunden ist, **dadurch gekennzeichnet, dass** von der elektronischen Schaltung (2) ein elektrisches Signal erzeugt und an die Übertragungseinrichtung angelegt wird und daraufhin von der Übertragungseinrichtung ein entsprechendes Sendesignal kontaktlos übertragen wird.

11. Verfahren nach Anspruch 10, **dadurch gekennzeichnet, dass** das elektrische Signal als ein periodisches Trägersignal ausgebildet wird.

12. Verfahren nach Anspruch 11, **dadurch gekennzeichnet, dass** das Trägersignal zur Übertragung von Daten moduliert wird.

13. Verfahren nach einem der Ansprüche 10 bis 12, **dadurch gekennzeichnet, dass** zur Erzeugung des elektrischen Signals der Pegel eines Signalausgangs (6) der elektronischen Schaltung (2), an den die Übertragungseinrichtung angeschlossen ist, zwischen unterschiedlichen Niveaus umgeschaltet wird.

14. Verfahren nach Anspruch 13, **dadurch gekennzeichnet, dass** die Umschaltung softwaregesteuert oder mittels eines Taktsignals, das von einem Taktgenerator (8) des tragbaren Datenträgers (1) erzeugt wird, erfolgt.

15. Verfahren nach einem der Ansprüche 10 bis 14, **dadurch gekennzeichnet, dass** das Sendesignal an einen weiteren tragbaren Datenträger (1) gesendet wird.

16. Verfahren nach Anspruch 15, **dadurch gekennzeichnet, dass** die beiden tragbaren Datenträger (1) mit ihren Hauptflächen aneinander gelegt werden.

17. Verfahren nach einem der Ansprüche 15 oder 16, **dadurch gekennzeichnet, dass** das Sendesignal von dem weiteren tragbaren Datenträger (1) empfangen und mittels einer Diode (21) demoduliert wird.

18. Verfahren nach einem der Ansprüche 15 bis 17, **dadurch gekennzeichnet, dass** zwischen den beiden tragbaren Datenträgern (1) eine Master-Slave-Hierarchie dynamisch festgelegt wird.

19. Verfahren nach einem der Ansprüche 10 bis 14, **dadurch gekennzeichnet, dass** das Sendesignal an ein Endgerät gesendet wird.

20. Verfahren nach Anspruch 19, **dadurch gekennzeichnet, dass** das Sendesignal zur Aktivierung des Endgeräts gesendet wird.
